# EUROPÄISCHE PATENTSCHRIFT

(11) **EP 0 733 659 B1**
(45) Veröffentlichungstag und Bekanntmachung des Hinweises auf die Patenterteilung: **07.05.2003**
(21) Anmeldenummer: 96101008.9
(22) Anmeldetag: 25.01.1996
(51) Int. Cl.: C08G 63/672, C09J 167/02

(54) **Polyester für das Verkleben von Textilien**
Polyester as an adhesive for application to textiles
Polyester utilisé comme colle pour textiles

(30) Priorität: 22.03.1995 DE 19510314
(43) Veröffentlichungstag der Anmeldung: 25.09.1996
(73) Patentinhaber: Degussa AG, 40474 Düsseldorf (DE)
(72) Erfinder: Simon, Ulrich, D-44623 Herne (DE); Hahn, Siegfried, D-53773 Hennef-Stossdorf (DE)

(56) Entgegenhaltungen:
- DE-A- 3 132 059
- US-A- 3 684 766
- US-A- 4 252 940
- US-A- 4 419 507
- CHEMICAL ABSTRACTS, vol. 72, no. 24, 15.Juni 1970 Columbus, Ohio, US; abstract no. 123008, JACKSON, WINSTON J.,JR.ET AL: "Polyester hot melt adhesives. I. Factors affecting adhesion to epoxy resin coatings" XP002035588 & J. APPL. POLYM. SCI., Bd. 14, Nr. 3, - 1970 Seiten 685-698,

## Beschreibung

Die Erfindung betrifft Polyetherester für das Verkleben von Textilien auf Basis Terephthalsäure, Isophthalsäure, 1,4-Butandiol und eines Polyalkylenetherdiols.

Für das Verkleben textiler Substrate, z. B. von Einlage- mit Oberstoffen zwecks Erzielung einer versteifenden Wirkung, werden Polymere verwendet, die meistens - als Pulver fein verteilt - oder aus der Schmelze, in regelmäßiger Anordnung auf die Innenseite eines der zu verklebenden Textilien gebracht, dann durch Einwirkung von Wärme partiell angeschmolzen und dadurch zum Ansintern gebracht werden, wonach das Aufbügeln des zu versteifenden Oberstoffes durch erneute Anwendung von Wärme und gleichzeitigem Druck in sogenannten Bügelpressen erfolgt.

Als Polymere für die Verwendung als Textilbügelpulver ist bereits eine Anzahl verschiedener Mischpolyester bekanntgeworden. Diese Polyester sind unzureichend beständig gegen die Einwirkung organischer Lösungsmittel, wie sie bei der Chemischreinigung von Textilien verwendet werden, sofern die Polyester ausschließlich Reste niedermolekularer Dicarbonsäuren und Dialkohole enthalten. Derart zusammengesetzte Polyester und ihre Verwendung als Textilkleber sind verschiedentlich beschrieben (US-PS 3 669 921, DE-OS 19 20 432, US-PS 3 948 859, DE-OS 30 37 100 und DE-OS 24 35 863). Diese Polyester werden überwiegend bei Textilien verwendet, die üblicherweise nur durch Waschen gereinigt werden, wie z. B. zum Versteifen von Hemdkragen, Manschetten und Blusen. Um sowohl wasch- als auch chemischreinigungsbeständige Verklebungen von Textilien zu erhalten, wurde die Verwendung von Block-Copolyetherestern beschrieben. So wird (JP-OS 54-153 835) ein Polyetherester als Textilkleber empfohlen, der a) 70 bis 40 Mol-% Terephthalsäure-, b) 30 bis 60 Mol-% Isophthalsäure-, c) 1,4-Butandiol-Reste, sowie d) 1 bis 10 Gew.-% (auf die Summe von a) bis d) bezogen) Reste eines Polyalkylenether-diols mit einer molaren Masse von 0,3 bis 6 kg/Mol einkondensiert enthält: die Komponente d) schließt Polyethylenglykol mit ein, wenn auch Polytetramethylenglykol bevorzugt wird. Derartige Polyester haben infolge der geringen Konzentration an der Komponente d) eine vergleichsweise hohe Schmelzviskosität, so daß relativ hohe Bügeltemperaturen und/oder lange Einbügelzeiten bzw. hohe Anpreßdrucke für das Herstellen der Klebverbindungen erforderlich werden. Dadurch können temperaturempfindlichere Stoffe unter Umständen bereits geschädigt werden.

Es wurde auch schon bekannt, die Bestandteile a) bis c) beizubehalten und die Konzentration des Bestandteils d) auf 10 bis 33 Gew.-% (berechnet wie oben) anzuheben, wobei der Bestandteil d) einen Rest des Polytetramethylenglykols der molaren Massen 0,6 bis 1,3 kg/Mol bedeutet (DE-OS 27 05 270). Die bei Verwendung erhöhter Konzentrationen des Bestandteils d) ausschließliche Verwendung von Polytetramethylenglykol beruht darauf, daß Polyethylenglykol in erhöhten Konzentrationen die Wasserempfindlichkeit derartiger Blockpolyester erhöht und die Waschbeständigkeit daraus hergestellter Textilverklebungen verschlechtert. So wird (DE-OS 24 51 369) für Gemische aus Blockpolyetherestern mit Dianhydriden und deren Verwendung zum Verkleben glattflächiger Substrate beschrieben, daß als Weichsegmente einzukondensierende, langkettige Polyalkylenetherdiole mit einem Molverhältnis von Kohlenstoff zu Sauerstoff von mehr als etwa 2,5 zu 1 im allgemeinen in Wasser weniger quellende und gegen Hydrolyse widerstandsfähigere Blockpolyester lieferten. Spielt also der Gesichtspunkt der Wasserempfindlichkeit, wie im Fall der Textilkleber-Polyester eine verwendungswesentliche Rolle, so wurde Polyethylenglykol zweckmäßig nicht verwendet, es sei denn (JP-OS 54-153 835) in niedrigen Konzentrationen.

In der DE-PS 31 32 059 wird ein Polyetherester für das Verkleben von Textilien auf Basis von Terephthalsäure, Isophthalsäure, 1,4-Butandiol und eines Polyalkylenetherdiols beschrieben. Das Molverhältnis von Terephthalsäure zu Isophthalsäure beträgt dabei von 48 bis 55 zu 52 bis 45.

Durch den hohen Anteil an Terephthalsäure ist der Polyester sehr kristallin, was immer zu Haftungsproblemen führt, und hat einen hohen Schmelzpunkt, was dem neueren Fixiertrend widerspricht. Es hat sich gezeigt, daß durch Absenkung des Anteils der Terephthalsäure auf 42 bis 45 Mol-% zugunsten der Isophthalsäure 55 bis 58 %, die Kristallinität und der Schmelzpunkt gesenkt werden konnten.

Der Erfindung lag daher die Aufgabe zugrunde einen Polyetherester zu finden, der die genannten Nachteile nicht aufweist. Überraschend wurde nun gefunden, daß ein Polyetherester auf Basis von Terephthalsäure, Isophthalsäure, 1,4-Butandiol und eines Polyalkylenetherdiols, dadurch gekennzeichnet, daß das Molverhältnis von Terephthalsäure zu Isophthalsäure von 35 bis 50 zu 65 bis 50, ganz besonders von 42 bis 47 zu 58 bis 53, beträgt und Polyethylenglykol in einem Anteil von 10,5 bis 25 Gew.-% und einer Molmasse von 0,4 bis 6 kg/Mol, bezogen auf die Summe aller im Polyetherester enthaltenen Reste, eingesetzt wird, diese Forderungen erfüllt. Vorzugsweise liegt das Molverhältnis von Terephthalsäure zu Isophthalsäure bei 42 zu 58 und 45 zu 55.

Bis zu 20 Mol-% der eingesetzten Isophthalsäure oder Terephthalsäure können durch Adipinsäure und/oder eine andere gesättigte Dicarbonsäure mit 6 bis 12 C-Atomen ersetzt werden.

Erstaunlicherweise wurde nun gefunden, daß sich Produkte mit solch hohen Isophthalsäureanteilen in Verbindung mit Polyethylenglykol ohne Probleme verarbeiten und vermahlen lassen, was aus bisheriger Kenntnis unmöglich erschien. Außerdem wurden um fast 20 °C niedrigere Schmelzpunkte gefunden (DSC 103 bis 108 °C), was dem neueren Fixiertrend entgegenkommt. Damit verbunden ist auch eine erheblich höhere Haftung auf kritischen Oberstoffen. Trotzdem konnte die Rückvernietung stark reduziert werden.

Das 1,4-Butandiol kann bis zu 20 Mol-%, vorzugsweise 5 bis 10 Mol-%, durch Hexandiol ersetzt werden.

Das verwendete Polyethylenglykol kann bis zu 10 Gew.-% durch Di-, Triethylenglykol oder durch niedrigmolekulare Alkylenetherdiole ersetzt werden.

Polyethylenglykol verleiht daraus hergestellten Polyetherestern bekanntlich eine besonders hohe thermisch-oxidative Anfälligkeit, weshalb zweckmäßig Stabilisatoren bei der Polyetheresterherstellung mitverwendet werden sollten (II. Zimmermann, K. Dietrich, Acta Polym. 1979, 30(4) 199 - 203).

In der Praxis werden weitere Zusätze, wie Nukleierungsmittel, z. B. Mikrotalkum, Antistatika, Gleitmittel oder Wachse als Vermahlungshilfsmittel entweder schon den Polyetheresterschmelzen oder beim oder nach dem Vermahlen der Polyetherester angewendet.

Die Herstellung der Polyetherester erfolgt prinzipiell nach den üblichen Schmelzkondensationsverfahren, wie z. B. in der DE-PS 31 32 059 beschrieben.

### Beispiele:

Die verwendeten Polyetherester hatten folgende Zusammensetzung:

### Beispiel 1:

42 Mol-% Terephthalsäure
58 Mol-% Isophthalsäure
100 Mol-% 1,4-Butandiol
+ 11 Gew.-% Polyethylenglykol, bezogen auf die Summe aller im Polyester enthaltene Bestandteile

### Beispiel 2:

45 Mol-% Terephthalsäure
55 Mol-% Isophthalsäure
100 Mol-% 1,4-Butandiol
+ 11 Gew.-% Polyethylenglykol, bezogen auf die Summe aller im Polyester enthaltene Bestandteile

### Vergleichsbeispiel (DE-PS 31 32 059):

50 Mol-% Terephthalsäure
50 Mol-% Isophthalsäure
100 Mol-% 1,4-Butandiol
+ 11 Gew.-% Polyethylenglykol, bezogen auf die Summe aller im Polyester enthaltene Bestandteile

Die Herstellung der Polyetherester erfolgt prinzipiell nach den üblichen Schmelzkondensationsverfahren. Ein typischer erfindungsgemäßer Polyetherester wurde wie folgt hergestellt:

In einem 40 l-Reaktor aus rostfreiem Stahl wurden 8,2 kg Dimethylterephthalat (42 Mol), 10,8 kg 1,4-Butandiol (120 Mol), 2,7 kg Polyethylenglykol (entspr. 11 Gew.-%, bezogen auf den theoret. entstehenden Polyester), 25 g Tetrabutyltitanat und 43 g 2-Äthylhexandiol-1,2 eingefüllt.

Nach Verdrängung der Luft durch Stickstoff wurde unter Normaldruck aufgeheizt, bei einer Innentemperatur von 120 bis 130 °C das Rührwerk eingeschaltet und bis zu einer End-Temperatur von 180 °C 3,1 l Destillat (im wesentlichen Methanol) mit einer Kolonnenkopf-Temperatur von 62 bis 67 °C entfernt. Unter Umgehung der Kolonne wurden weitere 0,7 l Destillat erhalten. Danach wurde auf 160 °C abgekühlt, entgegen einem starken Stickstoffstrom 10,1 kg Isophthalsäure (58 Mol) zugesetzt, die Temperatur auf 190 bis 200 °C eingestellt und 2 l Destillat (im wesentlichen Wasser) über die Kolonne abgetrieben. Danach wurden 13,5 g Irganox 1010® zugegeben, die Temperatur auf 240 bis 245 °C angehoben und zugleich Vakuum angelegt. Bei 245 °C und einem Druck von unter 1,3 · 10⁻³ bar wurde gerührt, bis die Zunahme des Rührwiderstandes einen vorbestimmten, empirisch ermittelten Wert anzeigte. Sodann wurde das Vakuum durch Stickstoff aufgehoben, die Schmelze abgelassen, erstarren gelassen und zerkleinert.

### Beispiele

Die Copolyester wurden mit einem gängigen Pastengrund gemischt und über eine Siebdruckschablone von 25 Mesh auf ein gängiges 20 g/m² Polyamidvlies appliziert, getrocknet und gesintert. Anschließend wurde gegen die beiden Oberstoffe aus der obigen Tabelle verklebt und anschließend die Haftung gemessen.

| Pastengrund: | |
|---|---|
| Wasser | 1 800 g |
| Mirox HP | 40 g |
| Intrasol 12/18/5 | 60 g |
| Tegopren 5847 | 10 g |
| Unimoll 66 | 80 g |
| Vestamelt X1151-P1 | 600 g |
| Mirox OX | 100 g |

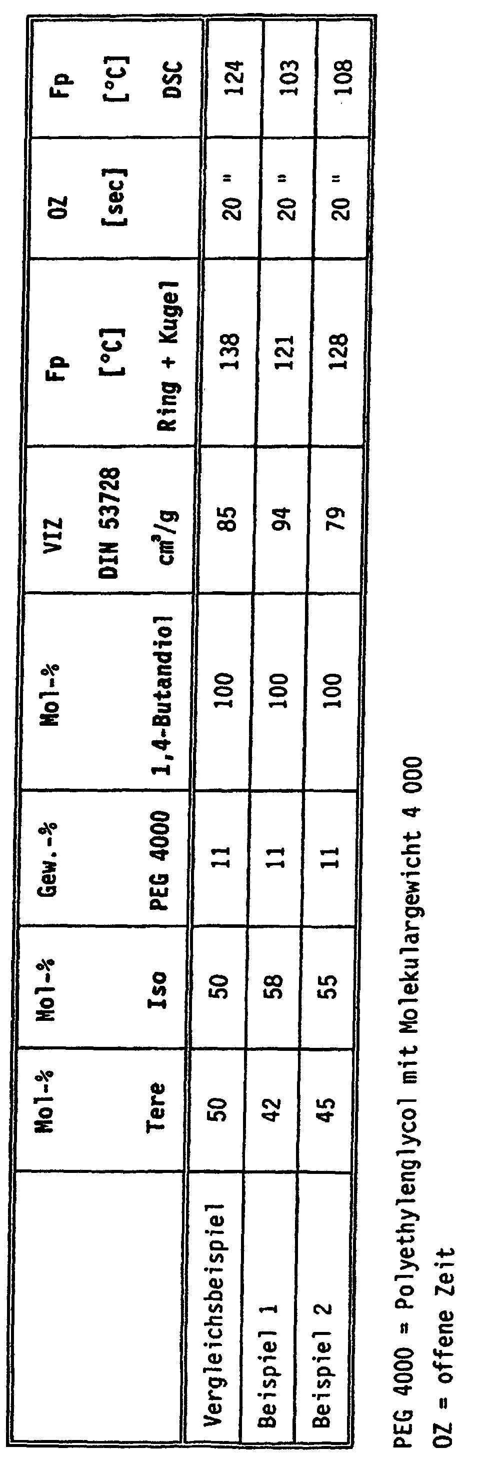

| **Versuch** | **Beispiel 1** | **Beispiel 2** | **Vergleichs- beispiel** |
|---|---|---|---|
| Klebeneigung auf Kaule | 1,75 N/5 cm | 0,1 N/5 cm | 5 N/5 cm |
| Rückvernietung | 1,5 N/10 cm | 0,5 N/10 cm | 4 N/10 cm |
| Trennkraft: primär (auf PES-Viskosegeorgette) | 4 | 3 | 3 |
| nach chemischer Reinigung | 6 | 6 | 4 |
| Trennkraft: primär (auf Baumwolle-Popelin) | 8 | 8 | 4 |
| nach 40 °C Wäsche | 8 | 9,5 | 4,5 |

| Fixierbedingungen: | |
|---|---|
| Fugentemperatur | 120 °C |
| Fixierzeit | 10 s |
| Preßdruck | 3,5 N |

Es wurde gefunden, daß die Beispiele 1 und 2 in allen Belangen dem Vergleichsbeispiel überlegen sind, besonders überzeugend sind die Waschbeständigkeiten der Beispiele.

## Patentansprüche

1. Polyetherester für das Verkleben von Textilien auf Basis von Terephthalsäure, Isophthalsäure, 1,4-Butandiol und eines Polyalkylenetherdiols,
**dadurch gekennzeichnet,**
**dass** das Molverhältnis von Terephthalsäure zu Isophthalsäure von 42 bis 47 zu 58 bis 53 beträgt und Polyethylenglykol in einem Anteil von 10,5 bis 25 Gew.-% und einer Molmasse von 0,4 bis 6 kg/Mol, bezogen auf die Summe aller im Polyetherester enthaltenden Reste, eingesetzt wird.

2. Polyetherester nach Anspruch 1,
**dadurch gekennzeichnet,**
**dass** das Molverhältnis von Terephthalsäure zu Isophthalsäure 42 zu 58 oder 45 zu 55 beträgt

3. Polyetherester nach Anspruch 1,
**dadurch gekennzeichnet,**
**dass** bis zu 20 Mol-% 1,4-Butandiol durch Hexandiol ersetzt wird.

4. Polyetherester nach Anspruch 1,
**dadurch gekennzeichnet,**
**dass** 5 bis 10 Mol-% 1,4-Butandiol durch Hexandiol ersetzt wird.

5. Polyetherester nach Anspruch 1,
**dadurch gekennzeichnet,**
**dass** bis zu 10 Gew.-% Polyethylenglykol durch Di-, Triethylenglykol oder niedrigmolekulare Alkylenetherdiole ersetzt wird.

## Claims

1. A polyether ester for the adhesive bonding of textiles, based on terephthalic acid, isophthalic acid, 1,4-butanediol and a polyalkylene ether diol, **characterized in that** the molar ratio of terephthalic acid to isophthalic acid is from 42 to 47:from 58 to 53, and polyethylene glycol is employed in a proportion of from 10.5 to 25% by weight and with a molecular mass of from 0.4 to 6 kg/mol, based on the sum of all of the residues present in the polyether ester.

2. A polyether ester according to claim 1, **characterized in that** the molar ratio of terephthalic acid to isophthalic acid is 42:58 or 45:55.

3. A polyether ester according to claim 1, **characterized in that** up to 20 mol% of 1,4-butanediol is replaced by hexanediol.

4. A polyether ester according to claim 1, **characterized in that** from 5 to 10 mol% of 1,4-butanediol is replaced by hexanediol.

5. A polyether ester according to claim 1, **characterized in that** up to 10% by weight of polyethylene glycol is replaced by di- or triethylene glycol or low molecular weight alkylene ether diols.

## Revendications

1. Polyétherester pour l'encollage de textiles à base d'acide téréphtalique, d'acide isophtalique, de 1,4-butanediol et d'un polyalkylènétherdiol,
**caractérisé en ce que**
le rapport molaire de l'acide téréphtalique à l'acide isophtalique est de 42 à 47 pour 58 à 53, et le polyéthylèneglycol est utilisé dans une proportion de 10.5 à 25% en poids et à une masse molaire de 0,4 à 6 Kg/mol, rapporté à la somme de tous les restes présents dans le polyétherester.

2. Polyétherester selon la revendication 1,
**caractérisé en ce que**
le rapport molaire de l'acide téréphtalique à l'acide isophtalique est de 42 pour 58 ou 45 pour 55.

3. Polyétherester selon la revendication 1,
**caractérisé en ce qu'**
on remplace jusqu'à 20 % molaire de 1,4-butanediol par de l'hexanediol.

4. Polyétherester selon la revendication 1,
**caractérisé en ce que**
on remplace de 5 à 10 % molaire de 1,4-butanediol par de l'hexanediol.

5. Polyétherester selon la revendication 1,
**caractérisé en ce que**
on remplace jusqu'à 10 % en poids de polyéthylèneglycol par du di- du triéthylèneglycol ou par des alkylènétherdiols à bas poids moléculaire.
